# EUROPEAN PATENT SPECIFICATION

(11) **EP 4 186 751 B1**
(45) Date of publication and mention of the grant of the patent: **02.10.2024**
(21) Application number: 21210227.1
(22) Date of filing: 24.11.2021
(51) Int. Cl.: B60Q 1/068

(54) **ADJUSTING SYSTEM FOR A VEHICLE HEADLAMP**
EINSTELLSYSTEM FÜR EINEN FAHRZEUGSCHEINWERFER
SYSTÈME DE RÉGLAGE POUR PHARE DE VÉHICULE

(43) Date of publication of application: 31.05.2023
(73) Proprietor: ZKW Group GmbH, 3250 Wieselburg (AT)
(72) Inventor: Berger, Martin, 3661 Artstetten (AT)
(74) Representative: Patentanwaltskanzlei Matschnig & Forsthuber OG

(56) References cited:
- EP-A1- 2 796 320
- WO-A1-2016/201466
- DE-C2- 3 429 040
- US-A- 4 737 891
- US-A1- 2019 176 682

## Description

The invention relates to an adjusting system for a vehicle headlamp for adjusting an optically relevant component of the vehicle headlamp, wherein the optically relevant component is mounted on a frame, which is adjustable at a fixed bearing point around a vertical and a horizontal axis, which cross the fixed bearing point, wherein the adjusting system comprises:
- a frame,
- a vertical adjusting device for adjusting the frame about the horizontal axis, wherein the vertical adjusting device is configured to engage with a vertical adjustment bearing point of the frame,
- a horizontal adjusting device for adjusting the frame about the vertical axis, wherein the horizontal adjusting device is configured to engage with a horizontal adjustment bearing point of the frame,
   wherein a fixed bearing point and the adjustment bearing points are arranged on the frame such that imaginary connecting lines between the adjustment bearing points and the fixed bearing point form a triangle,
   wherein the imaginary connecting line between the vertical adjustment bearing point and the fixed bearing point forms the vertical axis, wherein the imaginary connecting line between the horizontal adjustment bearing point and the fixed bearing point forms the horizontal axis,
- a holder for holding the vertical and horizontal adjusting devices and the frame, wherein the frame is mechanically connected to the holder via the fixed bearing point, and
   wherein the vertical adjusting device comprises
      - a first lever element having a lever axis and a first and second end opposite to each other along the lever axis, wherein the first lever element is pivotably connected to the holder via a at least one first fixed bearing point, so that the first and second end are movable around a first pivot axis lying in the first fixed bearing point,
      - a first actuating element drivable by a drive unit along a first linear stroke axis, wherein the first actuating element has a coupling section,
   wherein the coupling section of the first actuating element engages with the first end of the first lever element, and wherein the second end of the first lever element engages with the vertical adjustment bearing point of the frame, so that a rotation of the first end caused by the linear movement along the first linear stroke axis of the first actuating element causes a rotation of the second end of the first lever element (100) substantially in the opposite direction of the linear movement of the first actuating element along the first linear stroke axis around the first pivot axis, wherein a movement of the second end of the first lever element is transferred to the vertical adjustment bearing point of the frame causing a rotation of the frame around the horizontal axis,
   and/or

the horizontal adjusting device comprises
   - a second lever element having a lever axis and a first and second end opposite to each other along the lever axis, wherein the second lever element is pivotably connected to the holder via a at least one second fixed bearing point, so that the first and second end are movable around a second pivot axis lying in the second fixed bearing point,
   - a second actuating element drivable by a drive unit along a second linear stroke axis, wherein the second actuating element has a coupling section,
wherein the coupling section of the second actuating element engages with the first end of the second lever element, and wherein the second end of the second lever element engages with the horizontal adjustment bearing point of the frame, so that a rotation of the first end caused by the linear movement along the second linear stroke axis of the second actuating element causes a rotation of the second end of the second lever element substantially in the opposite direction of the linear movement of the second actuating element along the second linear stroke axis around the second pivot axis, wherein a movement of the second end of the second lever element is transferred to the horizontal adjustment bearing point of the frame causing a rotation of the frame around the vertical axis, wherein the first linear stroke axis is orthogonal to the vertical and horizontal axis, and wherein the second linear stroke axis is orthogonal to the vertical and horizontal axis.

Further, the invention relates also to a vehicle headlamp comprising at least one adjusting system according to the invention.

In the state of the art, an adjusting system for a vehicle headlamp for adjusting an optically relevant component of the vehicle headlamp comprises generally gliding or sliding elements, wherein the assembly of such elements is complicated and also a tolerance chain between the elements has to be considered, which consequently demands a higher accuracy in the production, which leads to higher costs.

US 4 737 897 A, WO 2016/201466 A1, DE 34 29 040 C2, EP 2 796 320 A1 and US 2019/176682 A1 show adjusting systems for vehicle headlamps of prior art.

It is an object of the invention to provide an enhanced adjusting system for a vehicle headlamp.

To achieve this object, the first pivot axis is not parallel to the horizontal axis.

As the terminology of "horizontal axis" and "vertical axis" anticipates, the horizontal axis is orthogonal to the vertical axis. Moreover, the terms "horizontal" and "vertical" are to be understood and to be seen in a correct installed state of the adjusting system in a vehicle.

For a person skilled in the art it is clear, that after pivoting the frame around the horizontal axis, which means that the frame changes is vertical orientation, the vertical axis formed by the imaginary connecting line between the vertical adjustment bearing point and the fixed bearing point, is not in an exact vertical position seen in a correct installed state of the adjusting system in a vehicle.

Further, the drive unit could be an electric drive unit, a pneumatic drive unit, a hydraulic drive unit, or a manually drive unit, e.g. by a screwdriver.

Advantageously, the first fixed bearing point of the first lever element is built as two ball joints, wherein the two ball joints determine the first pivot axis.

Advantageously, the second fixed bearing point of the second lever element is built as two ball joints, wherein the two ball joints determine the second pivot axis.

Advantageously, the first pivot axis is parallel to the horizontal axis or the first pivot axis is not parallel to the horizontal axis.

Advantageously, the first end of the first lever element having a horizontal offset to the vertical adjustment bearing point of the frame.

Advantageously, the vertical adjusting device comprises an adjustable coupling element, wherein the second end of the first lever element is coupled with the vertical adjustment bearing point of the frame via the adjustable coupling element, wherein the adjustable coupling element allows an adjustment of the distance between the second end of the first lever element and the vertical adjustment bearing point along an x-axis orthogonal to the vertical and horizontal axis.

In order to adjust the distance between the second end of the first lever element and the vertical adjustment bearing point along the x-axis, the adjustable coupling element advantageously is built of at least two parts, which are connected via a screw mechanism.

Advantageously, the horizontal adjusting device comprises an adjustable coupling element, wherein the second end of the second lever element is coupled with the horizontal adjustment bearing point of the frame via the adjustable coupling element, wherein the adjustable coupling element allows an adjustment of the distance between the second end of the second lever element and the horizontal adjustment bearing point along an x-axis orthogonal to the vertical and horizontal axis.

In order to adjust the distance between the second end of the second lever element and the horizontal adjustment bearing point along the x-axis, the adjustable coupling element advantageously is built of at least two parts, which are connected via a screw mechanism.

Advantageously, the optically relevant component is at least one light module.

Advantageously, the holder is a common holder for the vertical adjusting device and the horizontal adjusting device, or wherein the holder consists of a first holder and a second holder, separate from one another, wherein the first holder holds the vertical adjusting device and the second holder holds the horizontal adjusting device.

The object can also be achieved by a vehicle headlamp comprising at least one adjusting system according to the invention.

Advantageously, the vehicle headlamp comprises a housing for housing the adjusting system, wherein the holder is an integral part of the housing, or wherein the holder is a separate element mechanically connected to the housing.

In the following, in order to further demonstrate the present invention, illustrative and non-restrictive embodiments are discussed, as shown in the drawings, which show:
Fig. 1 a front view of an example of an adjusting system for a vehicle headlamp for adjusting an optically relevant component of the vehicle headlamp, wherein the adjusting system comprises a horizontal and vertical adjusting device,
Fig. 2 a perspective view of the adjusting system in Fig. 1, and
Fig. 3 a perspective back view of the adjusting system in Fig. 1.

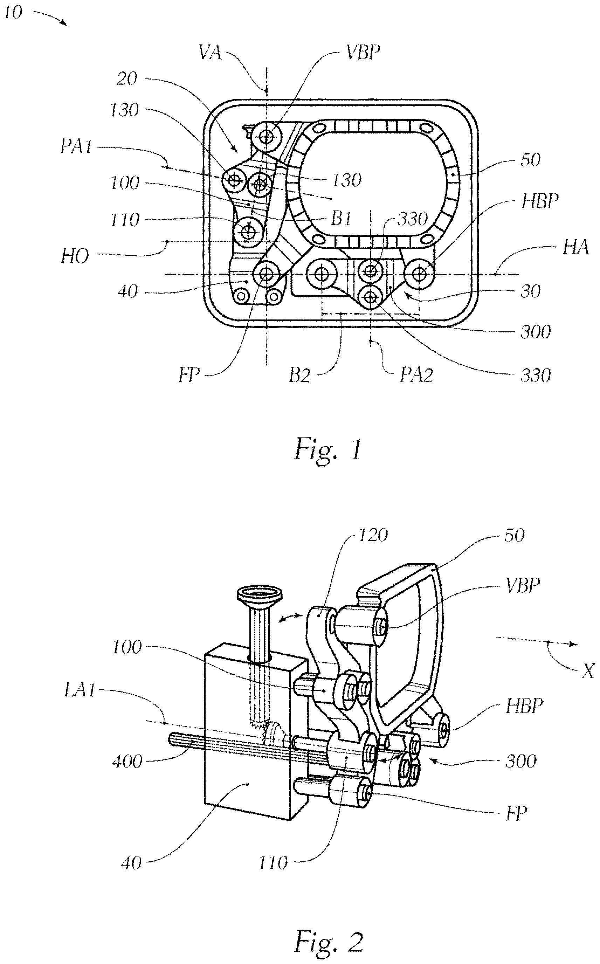

**Fig. 1** shows an adjusting system **10** for a vehicle headlamp for adjusting an optically relevant component of the vehicle headlamp, for example the optically relevant component is at least one light module, wherein the optically relevant component is mounted on a frame **50,** which is adjustable at a fixed bearing point **FP** around a vertical axis **VA** and a horizontal axis **HA,** which cross the fixed bearing point **FP.**

The adjusting system 10 comprises a vertical adjusting device 20 for adjusting the frame 50 about the horizontal axis HA, wherein the vertical adjusting device 20 is configured to engage with a vertical adjustment bearing point VBP of the frame 50.

Further, the adjusting system 10 comprises a horizontal adjusting device 30 for adjusting the frame 50 about the vertical axis VA, wherein the horizontal adjusting device 30 is configured to engage with a horizontal adjustment bearing point HBP of the frame.

The adjustment bearing points VBP, HBP are arranged on the frame 50 such that imaginary connecting lines between the adjustment bearing points VBP, HBP and the fixed bearing point FP form a triangle.

The imaginary connecting line between the vertical adjustment bearing point VBP and the fixed bearing point FP forms the vertical axis VA, wherein the imaginary connecting line between the horizontal adjustment bearing point HBP and the fixed bearing point FP forms the horizontal axis HA.

The adjusting system 10 also comprises a holder 40 for holding the vertical and horizontal adjusting device 20, 30 and the frame 50, wherein the frame 50 is mechanically connected to the holder 40 via the fixed bearing point FP. The holder 40 is a common holder for the vertical adjusting device 20 and the horizontal adjusting device 30. But it is also possible that the holder 40 consists of a first holder and a second holder, separate from one another, wherein the first holder holds the vertical adjusting device 20 and the second holder holds the horizontal adjusting device 30.

In the shown example in the figure, the vertical adjusting device 20 comprises a first lever element 100 having a lever axis B1 and a first and second end 110, 120 opposite to each other along the lever axis B1, wherein the first lever element 100 is pivotably connected to the holder 40 via two first fixed bearing points 130, so that the first and second end 110, 120 are movable around a first pivot axis PA1 lying in the first fixed bearing points 130. The first fixed bearing points 130 of the first lever element 100 are built as two ball joints, wherein the two ball joints determine the first pivot axis PA1. The first pivot axis PA1 is not parallel to the horizontal axis HA.

Moreover, the first end 110 of the first lever element 100 has a horizontal offset HO to the vertical adjustment bearing point VBP of the frame 50.

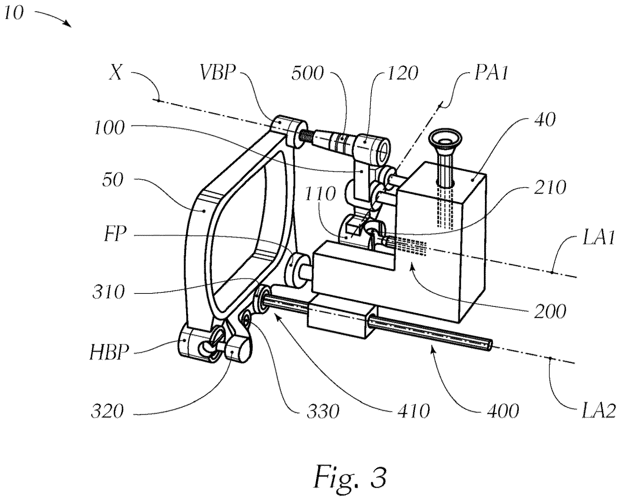

Further, the vertical adjusting device 20 comprises a first actuating element 200 drivable by a drive unit along a first linear stroke axis LA1, which can be seen for example in Fig. 2 and Fig. 3, wherein the first linear stroke axis LA1 is orthogonal to the vertical and horizontal axis VA, HA. The first actuating element 200 having a coupling section 210, wherein the coupling section 210 of the first actuating element 200 engages with the first end 110 of the first lever element 100, and wherein the second end 120 of the first lever element 100 engages with the vertical adjustment bearing point VBP of the frame 50, so that a rotation of the first end 110 caused by the linear movement along the first linear stroke axis LA1 of the first actuating element 200 causes a rotation of the second end 120 of the first lever element 100 substantially in the opposite direction of the linear movement of the first actuating element 200 along the first linear stroke axis LA1 around the first pivot axis PA1, wherein a movement of the second end 120 of the first lever element 100 is transferred to the vertical adjustment bearing point VBP of the frame 50 causing a rotation of the frame 50 around the horizontal axis HA, as indicated in Fig. 2 with a double arrow.

The vertical adjusting device 20 comprises an adjustable coupling element 500, better seen in Fig. 3, wherein the second end 120 of the first lever element 100 is coupled with the vertical adjustment bearing point VBP of the frame 50 via the adjustable coupling element 500, wherein the adjustable coupling element 500 allows an adjustment of the distance between the second end 120 of the first lever element 100 and the vertical adjustment bearing point VBP along an x-axis X orthogonal to the vertical and horizontal axis VA, HA.

Further, the horizontal adjusting device 30 of the shown example in Fig. 1 and Fig. 3 comprises a second lever element 300 having a lever axis B2 and a first and second end 310, 320 opposite to each other along the lever axis B2.

The second lever element 300 is pivotably connected to the holder 40 via two second fixed bearing points 330, so that the first and second end 310, 320 are movable around a second pivot axis PA2 lying in the second fixed bearing points 330. The second fixed bearing points 330 of the second lever element 300 are built as two ball joints, wherein the two ball joints determine the second pivot axis PA2.

Further, the horizontal adjusting device **30** comprises a second actuating element **400** drivable by a drive unit along a second linear stroke axis **LA2,** which can also be seen in **Fig. 2** and **Fig. 3****,** wherein the second linear stroke axis **LA2** is orthogonal to the vertical and horizontal axis **VA, HA.** The second actuating element **400** has a coupling section **410,** wherein the coupling section **410** of the second actuating element **400** engages with the first end **310** of the second lever element **300,** and wherein the second end **320** of the second lever element **300** engages with the horizontal adjustment bearing point **HBP** of the frame **50,** so that a rotation of the first end **310** caused by the linear movement along the second linear stroke axis **LA2** of the second actuating element **400** causes a rotation of the second end **320** of the second lever element **300** substantially in the opposite direction of the linear movement of the second actuating element **400** along the second linear stroke axis **LA2** around the second pivot axis **PA2,** wherein a movement of the second end **320** of the second lever element **300** is transferred to the horizontal adjustment bearing point **HBP** of the frame **50** causing a rotation of the frame **50** around the vertical axis **VA.**

The horizontal adjusting device **30** may comprise also an adjustable coupling element **500** (not shown in the figures), wherein the second end **320** of the second lever element **300** is coupled with the horizontal adjustment bearing point **HBP** of the frame **50** via the adjustable coupling element **500,** wherein the adjustable coupling element **500** allows an adjustment of the distance between the second end **320** of the second lever element **300** and the horizontal adjustment bearing point **HBP** along an x-axis **X** orthogonal to the vertical and horizontal axis **VA, HA.**

### LIST OF REFERENCE SIGNS

| | |
|---|---|
| Adjusting system | 10 |
| Vertical adjusting device | 20 |
| Horizontal adjusting device | 30 |
| Holder | 40 |
| Frame | 50 |
| First lever element | 100 |
| First end (first l. e.) | 110 |
| Second end (first l. e.) | 120 |
| First fixed bearing point | 130 |
| First actuating element | 200 |
| Coupling section (first a. e.) | 210 |
| Second lever element | 300 |
| First end (second l. e.) | 310 |
| Second end (second l. e.) | 320 |
| Second fixed bearing point | 330 |
| Second actuating element | 400 |
| Coupling section (second a. e.) | 410 |
| Adjustable coupling element | 500 |
| Fixed bearing point | FP |
| Vertical adjust. bearing point | VBP |
| Horizontal adjust. bearing point | HBP |
| Horizontal offset | HO |
| First lever axis | B1 |
| Second lever axis | B2 |
| Vertical axis | VA |
| Horizontal axis | HA |
| First pivot axis | PA1 |
| Second pivot axis | PA2 |
| First linear stroke axis | LA1 |
| Second linear stroke axis | LA2 |
| x-axis | X |

## Claims

1. Adjusting system (10) for a vehicle headlamp for adjusting an optically relevant component of the vehicle headlamp, wherein the optically relevant component is mounted on a frame (50), which is adjustable at a fixed bearing point (FP) around a vertical axis (VA) and a horizontal axis (HA), which cross the fixed bearing point (FP), wherein the adjusting system (10) comprises:
- a frame (50)
- a vertical adjusting device (20) for adjusting the frame (50) about the horizontal axis (HA), wherein the vertical adjusting device (20) is configured to engage with a vertical adjustment bearing point (VBP) of the frame (50),
- a horizontal adjusting device (30) for adjusting the frame (50) about the vertical axis (VA), wherein the horizontal adjusting device (30) is configured to engage with a horizontal adjustment bearing point (HBP) of the frame,
wherein a fixed bearing point (FP) and the adjustment bearing points (VBP, HBP) are arranged on the frame (50) such that imaginary connecting lines between the adjustment bearing points (VBP, HBP) and the fixed bearing point (FP) form a triangle,
wherein the imaginary connecting line between the vertical adjustment bearing point (VBP) and the fixed bearing point (FP) forms the vertical axis (VA), wherein the imaginary connecting line between the horizontal adjustment bearing point (HBP) and the fixed bearing point (FP) forms the horizontal axis (HA), and
- a holder (40) for holding the vertical and horizontal adjusting devices (20, 30) and the frame (50), wherein the frame (50) is mechanically connected to the holder (40) via the fixed bearing point (FP),
wherein the vertical adjusting device (20) comprises
- a first lever element (100) having a lever axis (B1) and a first and second end (110, 120) opposite to each other along the lever axis (B1), wherein the first lever element (100) is pivotably connected to the holder (40) via a at least one first fixed bearing point (130), so that the first and second end (110, 120) are movable around a first pivot axis (PA1) lying in the first fixed bearing point (130),
- a first actuating element (200) drivable by a drive unit along a first linear stroke axis (LA1), wherein the first actuating element (200) has a coupling section (210), wherein the coupling section (210) of the first actuating element (200) engages with the first end (110) of the first lever element (100), and wherein the second end (120) of the first lever element (100) engages with the vertical adjustment bearing point (VBP) of the frame (50), so that a rotation of the first end (110) caused by the linear movement along the first linear stroke axis (LA1) of the first actuating element (200) causes a rotation of the second end (120) of the first lever element (100) substantially in the opposite direction of the linear movement of the first actuating element (200) along the first linear stroke axis (LA1) around the first pivot axis (PA1), wherein a movement of the second end (120) of the first lever element (100) is transferred to the vertical adjustment bearing point (VBP) of the frame (50) causing a rotation of the frame (50) around the horizontal axis (HA),
and/or
the horizontal adjusting device (30) comprises
- a second lever element (300) having a lever axis (B2) and a first and second end (310, 320) opposite to each other along the lever axis (B2), wherein the second lever element (300) is pivotably connected to the holder (40) via a at least one second fixed bearing point (330), so that the first and second end (310, 320) are movable around a second pivot axis (PA2) lying in the second fixed bearing point (330),
- a second actuating element (400) drivable by a drive unit along a second linear stroke axis (LA2),
wherein the second actuating element (400) has a coupling section (410),
wherein the coupling section (410) of the second actuating element (400) engages with the first end (310) of the second lever element (300), and wherein the second end (320) of the second lever element (300) engages with the horizontal adjustment bearing point (HBP) of the frame (50), so that a rotation of the first end (310) caused by the linear movement along the second linear stroke axis (LA2) of the second actuating element (400) causes a rotation of the second end (320) of the second lever element (300) substantially in the opposite direction of the linear movement of the second actuating element (400) along the second linear stroke axis (LA2) around the second pivot axis (PA2), wherein a movement of the second end (320) of the second lever element (300) is transferred to the horizontal adjustment bearing point (HBP) of the frame (50) causing a rotation of the frame (50) around the vertical axis (VA), wherein the first linear stroke axis (LA1) is orthogonal to the vertical and horizontal axis (VA, HA), and wherein the second linear stroke axis (LA2) is orthogonal to the vertical and horizontal axis (VA, HA)
**characterized in that**
the first pivot axis (PA1) is not parallel to the horizontal axis (HA).

2. Adjusting system according to claim 1, **wherein** the first fixed bearing point (130) of the first lever element (100) is built as two ball joints, wherein the two ball joints determine the first pivot axis (PA1).

3. Adjusting system according to claim 1, **wherein** the second fixed bearing point (330) of the second lever element (300) is built as two ball joints, wherein the two ball joints determine the second pivot axis (PA2).

4. Adjusting system according to any one of claim 1 to 3, **wherein** the first end (110) of the first lever element (100) has a horizontal offset (HO) to the vertical adjustment bearing point (VBP) of the frame (50).

5. Adjusting system according to any one of claim 1 to 4, **wherein** the vertical adjusting device (20) comprises an adjustable coupling element (500), wherein the second end (120) of the first lever element (100) is coupled with the vertical adjustment bearing point (VBP) of the frame (50) via the adjustable coupling element (500), wherein the adjustable coupling element (500) allows an adjustment of the distance between the second end (120) of the first lever element (100) and the vertical adjustment bearing point (VBP) along an x-axis (X) orthogonal to the vertical and horizontal axis (VA, HA).

6. Adjusting system according to any one of claim 1 to 5, **wherein** the horizontal adjusting device (30) comprises an adjustable coupling element (500), wherein the second end (320) of the second lever element (300) is coupled with the horizontal adjustment bearing point (HBP) of the frame (50) via the adjustable coupling element (500), wherein the adjustable coupling element (500) allows an adjustment of the distance between the second end (320) of the second lever element (300) and the horizontal adjustment bearing point (HBP) along an x-axis (X) orthogonal to the vertical and horizontal axis (VA, HA).

7. Adjusting system according to any one of claim 1 to 6, **wherein** the optically relevant component is at least one light module.

8. Adjusting system according to any one of claim 1 to 7, **wherein** the holder (40) is a common holder for the vertical adjusting device (20) and the horizontal adjusting device (30), or wherein the holder (40) consists of a first holder and a second holder, separate from one another, wherein the first holder holds the vertical adjusting device (20) and the second holder holds the horizontal adjusting device (30).

9. Vehicle headlamp comprising at least one adjusting system (10) according to any one of claim 1 to 8.

10. Vehicle headlamp according to claim 9, **wherein** the vehicle headlamp comprises a housing for housing the adjusting system (10), wherein the holder (40) is an integral part of the housing, or wherein the holder (40) is a separate element mechanically connected to the housing.

## Patentansprüche

1. Einstellsystem (10) für einen Fahrzeugscheinwerfer zum Einstellen eines optisch relevanten Bauteils des Fahrzeugscheinwerfers, wobei das optisch relevante Bauteil an einem Rahmen (50) gelagert ist, der in einem festen Lagerpunkt (FP) um eine vertikale Achse (VA) und eine horizontale Achse (HA), die den festen Lagerpunkt (FP) kreuzen, verstellbar ist, wobei das Einstellsystem (10) umfasst:
- einen Rahmen (50)
- eine vertikale Einstellvorrichtung (20) zum Einstellen des Rahmens (50) um die horizontale Achse (HA), wobei die vertikale Einstellvorrichtung (20) so konfiguriert ist, dass sie mit einem vertikalen Einstell-Lagerpunkt (VBP) des Rahmens (50) in Eingriff kommt,
- eine horizontale Einstellvorrichtung (30) zum Einstellen des Rahmens (50) um die vertikale Achse (VA), wobei die horizontale Einstellvorrichtung (30) so konfiguriert ist, dass sie in einen horizontalen Einstell-Lagerpunkt (HBP) des Rahmens eingreift,
wobei ein fester Lagerpunkt (FP) und die Einstell-Lagerpunkte (VBP, HBP) an dem Rahmen (50) so angeordnet sind, dass imaginäre Verbindungslinien zwischen den Einstell-Lagerpunkten (VBP, HBP) und dem festen Lagerpunkt (FP) ein Dreieck bilden,
wobei die gedachte Verbindungslinie zwischen dem vertikalen Einstell-Lagerpunkt (VBP) und dem festen Lagerpunkt (FP) die vertikale Achse (VA) bildet, wobei die gedachte Verbindungslinie zwischen dem horizontalen Einstell-Lagerpunkt (HBP) und dem festen Lagerpunkt (FP) die horizontale Achse (HA) bildet, und
- einen Halter (40) zum Halten der vertikalen und horizontalen Verstellvorrichtung (20, 30) und des Rahmens (50), wobei der Rahmen (50) über den festen Lagerpunkt (FP) mechanisch mit dem Halter (40) verbunden ist,
wobei die vertikale Verstellvorrichtung (20) umfasst
- ein erstes Hebelelement (100) mit einer Hebelachse (B1) und einem ersten und zweiten Ende (110, 120), die sich entlang der Hebelachse (B1) gegenüberliegen, wobei das erste Hebelelement (100) über mindestens einen ersten festen Lagerpunkt (130) schwenkbar mit dem Halter (40) verbunden ist, so dass das erste und zweite Ende (110, 120) um eine erste Schwenkachse (PA1), die in dem ersten festen Lagerpunkt (130) liegt, beweglich sind,
- ein erstes Betätigungselement (200), das von einer Antriebseinheit entlang einer ersten linearen Hubachse (LA1) antreibbar ist, wobei das erste Betätigungselement (200) einen Kopplungsabschnitt (210) aufweist,
wobei der Kopplungsabschnitt (210) des ersten Betätigungselements (200) mit dem ersten Ende (110) des ersten Hebelelements (100) in Eingriff steht, und wobei das zweite Ende (120) des ersten Hebelelements (100) mit dem Vertikalverstell-Lagerpunkt (VBP) des Rahmens (50) in Eingriff steht, so dass eine Drehung des ersten Endes (110), die durch die lineare Bewegung entlang der ersten linearen Hubachse (LA1) des ersten Betätigungselements (200) verursacht wird, eine Drehung des zweiten Endes (120) des ersten Hebelelements (100) im Wesentlichen in der entgegengesetzten Richtung der linearen Bewegung des ersten Betätigungselements (200) entlang der ersten linearen Hubachse (LA1) um die erste Schwenkachse (PA1) bewirkt, wobei eine Bewegung des zweiten Endes (120) des ersten Hebelelements (100) auf den vertikalen Einstell-Lagerpunkt (VBP) des Rahmens (50) übertragen wird, was eine Drehung des Rahmens (50) um die horizontale Achse (HA) bewirkt,
und/oder
die Horizontalverstellvorrichtung (30) umfasst
- ein zweites Hebelelement (300) mit einer Hebelachse (B2) und einem ersten und zweiten Ende (310, 320), die sich entlang der Hebelachse (B2) gegenüberliegen, wobei das zweite Hebelelement (300) über mindestens einen zweiten festen Lagerpunkt (330) schwenkbar mit dem Halter (40) verbunden ist, so dass das erste und zweite Ende (310, 320) um eine zweite Schwenkachse (PA2), die in dem zweiten festen Lagerpunkt (330) liegt, beweglich sind,
- ein zweites Betätigungselement (400), das von einer Antriebseinheit entlang einer zweiten linearen Hubachse (LA2) antreibbar ist, wobei das zweite Betätigungselement (400) einen Kopplungsabschnitt (410) aufweist,
wobei der Kopplungsabschnitt (410) des zweiten Betätigungselements (400) mit dem ersten Ende (310) des zweiten Hebelelements (300) in Eingriff steht, und wobei das zweite Ende (320) des zweiten Hebelelements (300) mit dem horizontalen Verstelllagerpunkt (HBP) des Rahmens (50) in Eingriff steht, so dass eine Drehung des ersten Endes (310), die durch die lineare Bewegung entlang der zweiten linearen Hubachse (LA2) des zweiten Betätigungselements (400) verursacht wird, eine Drehung des zweiten Endes (320) des zweiten Hebelelements (300) im Wesentlichen in der entgegengesetzten Richtung der linearen Bewegung des zweiten Betätigungselements (400) entlang der zweiten linearen Hubachse (LA2) um die zweite Schwenkachse (PA2) bewirkt, wobei eine Bewegung des zweiten Endes (320) des zweiten Hebelelements (300) auf den horizontalen Einstell-Lagerpunkt (HBP) des Rahmens (50) übertragen wird, was eine Drehung des Rahmens (50) um die vertikale Achse (VA) bewirkt, wobei die erste lineare Hubachse (LA1) orthogonal zu der vertikalen und horizontalen Achse (VA, HA) ist, und wobei die zweite lineare Hubachse (LA2) orthogonal zu der vertikalen und horizontalen Achse (VA, HA) ist
**dadurch gekennzeichnet, dass**
die erste Schwenkachse (PA1) nicht parallel zur horizontalen Achse (HA) verläuft.

2. Einstellsystem nach Anspruch 1, wobei der erste Festlagerpunkt (130) des ersten Hebelelements (100) als zwei Kugelgelenke ausgebildet ist, wobei die beiden Kugelgelenke die erste Schwenkachse (PA1) bestimmen.

3. Einstellsystem nach Anspruch 1, wobei die zweite Festlagerstelle (330) des zweiten Hebelelements (300) als zwei Kugelgelenke ausgebildet ist, wobei die beiden Kugelgelenke die zweite Schwenkachse (PA2) bestimmen.

4. Einstellsystem nach einem der Ansprüche 1 bis 3, wobei das erste Ende (110) des ersten Hebelelements (100) einen horizontalen Versatz (HO) zum vertikalen Verstelllagerpunkt (VBP) des Rahmens (50) aufweist.

5. Einstellsystem nach einem der Ansprüche 1 bis 4, wobei die Vertikalverstellvorrichtung (20) ein verstellbares Kupplungselement (500) aufweist, wobei das zweite Ende (120) des ersten Hebelelements (100) über das verstellbare Kupplungselement (500) mit dem Vertikalverstell-Lagerpunkt (VBP) des Rahmens (50) gekoppelt ist, wobei das einstellbare Kupplungselement (500) eine Einstellung des Abstands zwischen dem zweiten Ende (120) des ersten Hebelelements (100) und dem Vertikaleinstell-Lagerpunkt (VBP) entlang einer X-Achse (X) orthogonal zu der vertikalen und horizontalen Achse (VA, HA) ermöglicht.

6. Einstellsystem nach einem der Ansprüche 1 bis 5, wobei die Horizontalverstellvorrichtung (30) ein verstellbares Kopplungselement (500) aufweist, wobei das zweite Ende (320) des zweiten Hebelelements (300) über das verstellbare Kopplungselement (500) mit dem Horizontalverstell-Lagerpunkt (HBP) des Rahmens (50) gekoppelt ist, wobei das einstellbare Kopplungselement (500) eine Einstellung des Abstands zwischen dem zweiten Ende (320) des zweiten Hebelelements (300) und dem horizontalen Einstell-Lagerpunkt (HBP) entlang einer X-Achse (X) orthogonal zu der vertikalen und horizontalen Achse (VA, HA) ermöglicht.

7. Einstellsystem nach einem der Ansprüche 1 bis 6, wobei die optisch relevante Komponente mindestens ein Lichtmodul ist.

8. Einstellsystem nach einem der Ansprüche 1 bis 7, wobei die Halterung (40) eine gemeinsame Halterung für die vertikale Einstellvorrichtung (20) und die horizontale Einstellvorrichtung (30) ist, oder wobei die Halterung (40) aus einer ersten Halterung und einer zweiten Halterung besteht, die voneinander getrennt sind, wobei die erste Halterung die vertikale Einstellvorrichtung (20) und die zweite Halterung die horizontale Justiereinrichtung (30) hält.

9. Fahrzeugscheinwerfer mit mindestens einem Einstellsystem (10) nach einem der Ansprüche 1 bis 8.

10. Fahrzeugscheinwerfer nach Anspruch 9, wobei der Fahrzeugscheinwerfer ein Gehäuse zur Aufnahme des Einstellsystems (10) umfasst, wobei der Halter (40) ein integraler Bestandteil des Gehäuses ist oder wobei der Halter (40) ein separates Element ist, das mechanisch mit dem Gehäuse verbunden ist.

## Revendications

1. Système de réglage (10) pour un projecteur de véhicule permettant de régler un composant optique du projecteur du véhicule, dans lequel le composant optique est monté sur un cadre (50), qui est réglable à un point d'appui fixe (FP) autour d'un axe vertical (VA) et d'un axe horizontal (HA), qui traversent le point d'appui fixe (FP), dans lequel le système de réglage (10) comprend :
- un cadre (50)
- un dispositif de réglage vertical (20) pour régler le cadre (50) autour de l'axe horizontal (HA), dans lequel le dispositif de réglage vertical (20) est configuré pour s'engager dans un point d'appui de réglage vertical (VBP) du cadre (50),
- un dispositif de réglage horizontal (30) pour régler le cadre (50) autour de l'axe vertical (VA), dans lequel le dispositif de réglage horizontal (30) est configuré pour s'engager dans un point d'appui de réglage horizontal (HBP) du cadre,
dans lequel un point d'appui fixe (FP) et les points d'appui de réglage (VBP, HBP) sont disposés sur le cadre (50) de telle sorte que les lignes de connexion imaginaires entre les points d'appui de réglage (VBP, HBP) et le point d'appui fixe (FP) forment un triangle,
dans lequel la ligne de connexion imaginaire entre le point d'appui de réglage vertical (VBP) et le point d'appui fixe (FP) forme l'axe vertical (VA), dans lequel la ligne de connexion imaginaire entre le point d'appui de réglage horizontal (HBP) et le point d'appui fixe (FP) forme l'axe horizontal (HA), et
- un support (40) pour maintenir les dispositifs de réglage vertical et horizontal (20, 30) et le cadre (50), dans lequel le cadre (50) est mécaniquement relié au support (40) par l'intermédiaire du point d'appui fixe (FP),
dans lequel le dispositif de réglage vertical (20) comprend
- un premier élément de levier (100) ayant un axe de levier (B1) et une première et une deuxième extrémité (110, 120) opposées l'une à l'autre le long de l'axe de levier (B1), dans lequel le premier élément de levier (100) est relié de manière pivotante au support (40) par l'intermédiaire d'au moins un premier point d'appui fixe (130), de sorte que la première et la deuxième extrémité (110, 120) sont mobiles autour d'un premier axe de pivot (PA1) situé dans le premier point d'appui fixe (130),
- un premier élément d'actionnement (200) pouvant être entraîné par une unité d'entraînement le long d'un premier axe de course linéaire (LA1), dans lequel le premier élément d'actionnement (200) comporte une section d'accouplement (210),
dans lequel la section de couplage (210) du premier élément d'actionnement (200) s'engage avec la première extrémité (110) du premier élément de levier (100), et dans lequel la deuxième extrémité (120) du premier élément de levier (100) s'engage avec le point d'appui d'ajustement vertical (VBP) du cadre (50), de sorte qu'une rotation de la première extrémité (110) provoquée par le mouvement linéaire le long du premier axe de course linéaire (LA1) du premier élément d'actionnement (200) entraîne une rotation de la deuxième extrémité (120) du premier élément de levier (100) sensiblement dans la direction opposée au mouvement linéaire du premier élément d'actionnement (200) le long du premier axe de course linéaire (LA1) autour du premier axe de pivotement (PA1), le mouvement de la deuxième extrémité (120) du premier élément de levier (100) est transféré au point d'appui d'ajustement vertical (VBP) du cadre (50), ce qui entraîne une rotation du cadre (50) autour de l'axe horizontal (HA),
et/ou
le dispositif de réglage horizontal (30) comprend
- un deuxième élément de levier (300) ayant un axe de levier (B2) et une première et une deuxième extrémité (310, 320) opposées l'une à l'autre le long de l'axe de levier (B2), dans lequel le deuxième élément de levier (300) est relié de manière pivotante au support (40) par l'intermédiaire d'au moins un deuxième point d'appui fixe (330), de sorte que la première et la deuxième extrémité (310, 320) sont mobiles autour d'un deuxième axe de pivotement (PA2) situé dans le deuxième point d'appui fixe (330),
- un deuxième élément d'actionnement (400) pouvant être entraîné par une unité d'entraînement le long d'un deuxième axe de course linéaire (LA2), dans lequel le deuxième élément d'actionnement (400) comporte une section d'accouplement (410),
dans lequel la section de couplage (410) du second élément d'actionnement (400) est en prise avec la première extrémité (310) du second élément de levier (300), et dans lequel la seconde extrémité (320) du second élément de levier (300) est en prise avec le point d'appui d'ajustement horizontal (HBP) du cadre (50), de sorte qu'une rotation de la première extrémité (310) provoquée par le mouvement linéaire le long du deuxième axe de course linéaire (LA2) du deuxième élément d'actionnement (400) entraîne une rotation de la deuxième extrémité (320) du deuxième élément de levier (300) sensiblement dans la direction opposée au mouvement linéaire du deuxième élément d'actionnement (400) le long du deuxième axe de course linéaire (LA2) autour du deuxième axe de pivotement (PA2), dans lequel un mouvement de la deuxième extrémité (320) du deuxième élément de levier (300) est transféré au point d'appui de réglage horizontal (HBP) du cadre (50), entraînant une rotation du cadre (50) autour de l'axe vertical (VA), dans lequel le premier axe de course linéaire (LA1) est orthogonal aux axes vertical et horizontal (VA, HA), et dans lequel le deuxième axe de course linéaire (LA2) est orthogonal aux axes vertical et horizontal (VA, HA)
**caractérisé par le fait que**
le premier axe de pivotement (PA1) n'est pas parallèle à l'axe horizontal (HA).

2. Système de réglage selon la revendication 1, dans lequel le premier point d'appui fixe (130) du premier élément de levier (100) est constitué de deux joints à rotule, les deux joints à rotule déterminant le premier axe de pivotement (PA1).

3. Système de réglage selon la revendication 1, dans lequel le deuxième point d'appui fixe (330) du deuxième élément de levier (300) est constitué de deux articulations sphériques, les deux articulations sphériques déterminant le deuxième axe de pivotement (PA2).

4. Système de réglage selon l'une des revendications 1 à 3, dans lequel la première extrémité (110) du premier élément de levier (100) présente un décalage horizontal (HO) par rapport au point d'appui de réglage vertical (VBP) du cadre (50).

5. Système de réglage selon l'une des revendications 1 à 4, dans lequel le dispositif de réglage vertical (20) comprend un élément de couplage réglable (500), dans lequel la deuxième extrémité (120) du premier élément de levier (100) est couplée au point d'appui de réglage vertical (VBP) du cadre (50) par l'intermédiaire de l'élément de couplage réglable (500), l'élément de couplage réglable (500) permet de régler la distance entre la deuxième extrémité (120) du premier élément de levier (100) et le point d'appui de réglage vertical (VBP) le long d'un axe x (X) orthogonal aux axes vertical et horizontal (VA, HA).

6. Système de réglage selon l'une des revendications 1 à 5, dans lequel le dispositif de réglage horizontal (30) comprend un élément de couplage réglable (500), dans lequel la deuxième extrémité (320) du deuxième élément de levier (300) est couplée au point d'appui de réglage horizontal (HBP) du cadre (50) par l'intermédiaire de l'élément de couplage réglable (500), l'élément d'accouplement réglable (500) permet de régler la distance entre la deuxième extrémité (320) du deuxième élément de levier (300) et le point d'appui de réglage horizontal (HBP) le long d'un axe x (X) orthogonal à l'axe vertical et à l'axe horizontal (VA, HA).

7. Système de réglage selon l'une des revendications 1 à 6, dans lequel le composant optiquement pertinent est au moins un module lumineux.

8. Système de réglage selon l'une des revendications 1 à 7, dans lequel le support (40) est un support commun pour le dispositif de réglage vertical (20) et le dispositif de réglage horizontal (30), ou dans lequel le support (40) consiste en un premier support et un second support, séparés l'un de l'autre, dans lequel le premier support maintient le dispositif de réglage vertical (20) et le second support maintient le dispositif de réglage horizontal (30).

9. Projecteur de véhicule comprenant au moins un système de réglage (10) selon l'une quelconque des revendications 1 à 8.

10. Projecteur de véhicule selon la revendication 9, dans lequel le projecteur de véhicule comprend un boîtier pour loger le système de réglage (10), dans lequel le support (40) fait partie intégrante du boîtier, ou dans lequel le support (40) est un élément séparé relié mécaniquement au boîtier.
